# EUROPEAN PATENT APPLICATION

(11) **EP 2 897 135 A1**
(43) Date of publication of application: **22.07.2015**
(21) Application number: 13836344.5
(22) Date of filing: 22.07.2013
(51) Int. Cl.: H01B 7/24, B32B 5/26, D04H 1/4374, H01B 7/00, H02G 3/04

(54) **PROTECTION MATERIAL FOR WIRING HARNESSES AND WIRING HARNESS PROTECTION MEMBER**

(30) Priority: 12.09.2012 JP 2012200127
(71) Applicant: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Chuo-ku Osaka-shi Osaka 541-0041 (JP)
(72) Inventor: TAKATA, Yutaka, Yokkaichi-shi Mie 510-8503 (JP); TANAKA, Shigeyuki, Yokkaichi-shi Mie 510-8503 (JP)
(74) Representative: Müller-Boré & Partner Patentanwälte PartG mbB
(86) International application number: PCT/JP2013/069758
(87) International publication number: WO 2014/041895

(57) **Abstract**

It is aimed to provide a protective material for wiring harness which is good in adhesiveness, makes tensile strength of a protective member for wiring harness difficult to decrease at a high temperature and is excellent in heat resistance, a protective member for wiring harness and a wiring harness. A protective material for wiring harness 1 is composed of a nonwoven fabric laminate formed by laminating at least two nonwoven fabrics, and the nonwoven fabric laminate includes a base nonwoven fabric 2 mainly containing main fibers and configured to impart strength and a heat adhesive nonwoven fabric 3 mainly containing binder fibers having a heat adhesive property and configured to impart thermoformability.

## Description

### Technical Field

The present invention relates to a protective material for wiring harness, a protective member for wiring harness and a wiring harness.

### Background Art

In recent years, products have progressed to have higher performance and higher functions, centering on automotive vehicles and electronic products. To accurately operate various types of electronic equipment such as automotive vehicles and electronic products, a plurality of wires are used in internal wiring of automotive vehicles, electronic products and the like. Generally, these plurality of wires are used in the form of a wiring harness.

In a wiring harness, a wire bundle composed of a plurality of wires is assembled in a form necessary for wiring in advance. For example, a wiring harness is so formed that, after necessary branching is formed and connectors and the like are attached to ends of the wiring harness, one of wiring harness protective members having various shapes such as a tape-like, tube-like or sheet-like wiring harness protective member is wound around the outer periphery of the wire bundle.

Generally, nonwoven fabrics produced using polyethylene terephthalate (PET) resin short fibers are used in many industrial applications including an application for automotive vehicles such as in the form of filters, cushion materials, vehicle seat materials and vehicle ceiling materials. The applicant of this application and others previously proposed a protective member for wiring harness and a wiring harness using a nonwoven fabric as a protective material for wiring harness (see patent literature 1).

### Citation List

### Patent Literature

Patent literature 1: Japanese Unexamined Patent Publication No. 2010-267412

### Summary of the Invention

### Technical Problem

Since a protective material for wiring harness using a conventional short fiber nonwoven fabric is easily softened and melted at a high temperature when being used as a protective member for wiring harness since binder fibers having a low softening point are mixed, thereby presenting a problem of reducing tensile strength of the protective member for wiring harness itself.

Further, the content of the binder fibers, which act to increase an adhesive force, needs to be increased. However, if the content of the binder fibers increases, there is a problem of reducing heat resistance.

The present invention seeks to solve the problems of the above prior art and aims to provide a protective material for wiring harness which is good in moldability, makes tensile strength of a protective member for wiring harness difficult to decrease at a high temperature and is excellent in heat resistance, a protective member for wiring harness and a wiring harness.

### Solution to Problem

To solve the above problems, the present invention is directed to a protective material for wiring harness used to form a protective member for wiring harness and composed of a nonwoven fabric laminate formed by laminating at least two nonwoven fabrics, wherein the nonwoven fabric laminate includes a base nonwoven fabric mainly containing main fibers and configured to impart strength and a heat adhesive nonwoven fabric mainly containing binder fibers having a heat adhesive property and configured to impart thermoformability.

In the above protective material for wiring harness, the main fibers of the base nonwoven fabric may be short fibers.

In the above protective material for wiring harness, the main fibers of the base nonwoven fabric may be long fibers.

In the above protective material for wiring harness, the main fibers of the base nonwoven fabric are preferably one type of fibers selected from a group composed of polyether fibers, polyolefin fibers, polyamide fibers, polyvinyl chloride fibers, rayon fibers, acrylonitrile fibers, cellulose fibers and glass fibers.

In the above protective material for wiring harness, the binder fibers of the heat adhesive nonwoven fabric are preferably one type of fibers selected from a group composed of low melting point polyester fibers and polyolefin fibers.

The present invention is also directed to a protective member for wiring harness obtained by molding the above protective member for wiring harness into a predetermined shape.

The present invention is further directed to a wiring harness in which a wire bundle is covered with a protective member for wiring harness obtained by molding the above protective member for wiring harness into a predetermined shape, wherein the protective member for wiring harness is so arranged that the base nonwoven fabric is located on an outer side.

### Effects of the Invention

The protective material for wiring harness of the present invention is used to form the protective member for wiring harness and composed of the nonwoven fabric laminate formed by laminating at least two nonwoven fabrics, and the nonwoven fabric laminate includes the base nonwoven fabric mainly containing the main fibers and configured to impart strength and the heat adhesive nonwoven fabric mainly containing the binder fibers having a heat adhesive property and configured to impart thermoformability. Thus, as compared with a conventional protective material for wiring harness composed of a single layer of nonwoven fabric containing binder fibers, the binder fibers can be reduced in amount as a whole and a protective member for wiring harness and a wiring harness excellent in heat resistance can be obtained without reducing adhesiveness and moldability by providing each nonwoven fabric layer with a different function so that strength and heat resistance of the whole protective material are imparted by the base nonwoven fabric and thermoformability is imparted by the heat adhesive fibers.

In the wiring harness of the present invention, the wire bundle is covered with the protective member for wiring harness obtained by molding the above protective member for wiring harness. A protection performance can be exhibited by the base nonwoven fabric located on the outer side of the protective member for wiring harness and adhesiveness to the wire bundle and good bonding of the protective member for wiring harness are obtained by the heat adhesive nonwoven fabric on the inner side. Further, since the heat adhesive nonwoven fabric is not exposed to outside, there is no such problem that a surface becomes adhesive due to the resin of the binder fibers melted by heating.

Since the protective member for wiring harness of the present invention is obtained by molding the above protective material for wiring harness into the predetermined shape, it can be used to form the above wiring harness.

### Brief Description of the Drawings

FIG. 1 is a section showing an example of a protective material for wiring harness of the present invention,
FIG. 2 is a section showing an example of a wiring harness of the present invention, and
FIG. 3 is an external perspective view showing other examples of the protective member for wiring harness and the wiring harness of the present invention.

### Embodiment of the Invention

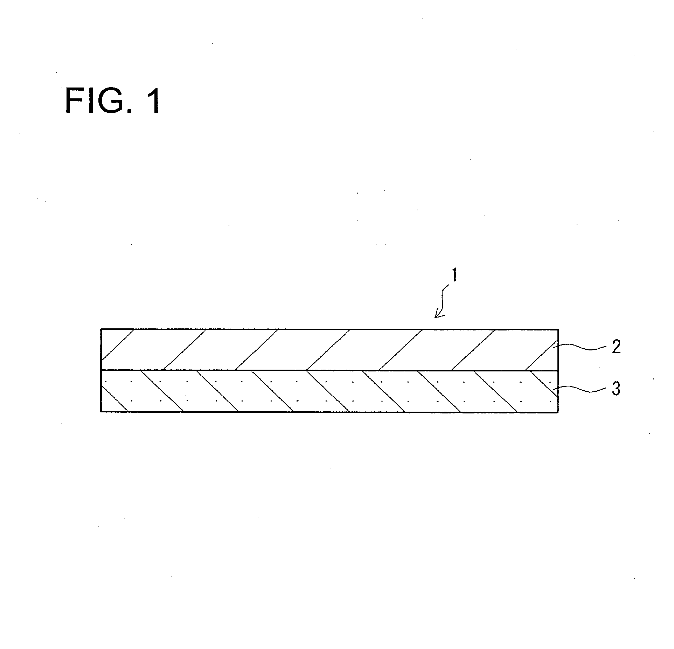

Hereinafter, an embodiment of the present invention is described in detail using the drawings. FIG. 1 is a section showing an example of a protective material for wiring harness of the present invention. A protective material for wiring harness 1 of the present invention is used to form a protective member for wiring harness and, as shown in FIG. 1, composed of a nonwoven fabric laminate in which two nonwoven fabrics, i.e. a base nonwoven fabric 2 and a heat adhesive nonwoven fabric 3 are laminated. The two nonwoven fabrics 2, 3 are laminated and united by needle punching.

The base nonwoven fabric 2 is for imparting strength as a core member when a protective member for wiring harness is formed using main fibers as a main component. For example, either single fibers or long fibers may be used as the main fibers. Further, the base nonwoven fabric 2 has only to contain 50 mass % or more of the main fibers and other fibers such as binder fibers (described in detail later) may be mixed.

A fiber diameter of the above main fibers is preferably 1 to 40 dt. A fiber diameter of the above binder fibers is preferably 1 to 40 dt.

Types of the main fibers of the base nonwoven fabric 2 include polyester fibers, polyolefin fibers, polyamide fibers, polyvinyl chloride fibers, rayon fibers, acrylonitrile fibers, cellulose fibers and glass fibers. A single type of these may be used or a plurality of types of these may be mixed.

In the case of using short fibers as the main fibers of the base nonwoven fabric 2, fibers having a fiber length of 30 to 120 mm are preferable. The shape of the fibers is not particularly limited and modified cross-section fibers such as core-sheath, cylindrical, hollow and side-by-side type fibers besides normal circular cross-section fibers may be used.

The base nonwoven fabric 2 used preferably has a basis weight of 100 to 2500 g/m² and a thickness of 0.1 to 30 mm. In the case of using short fibers, the base nonwoven fabric 2 can be produced by needle punching. Further, in the case of using long fibers, the base nonwoven fabric 2 can be produced by spun bonding.

In the case of using a long fiber nonwoven fabric as the main fibers, tensile strength and the like are high as compared with a short fiber nonwoven fabric. Thus, there is an advantage of imparting a robust physical property to the protective member for wiring harness. Note that since the long fiber nonwoven fabric cannot be mixed with other fibers such as binder fibers, it is impossible to impart moldability in a configuration as a single-layer nonwoven fabric. Thermoformability can be imparted by being laminated with the heat adhesive nonwoven fabric 3.

The heat adhesive nonwoven fabric 3 mainly contains binder fibers having a heat adhesive property and imparts thermoformability to the protective material for wiring harness 1. The heat adhesive nonwoven fabric 3 has only to contain 50 mass % or more of the binder fibers and may contain other fibers illustrated as the main fibers and the like above. Resin fibers having a low melting point (softening point) with respect to the main fibers of the base nonwoven fabric 2 are used as the binder fibers, which are heat adhesive fibers, to impart thermoformability. A softening point of the binder fibers is preferably 200°C or lower.

Thermoformability means to have such thermoplasticity that a material can be molded into a predetermined shape by heating. By using a nonwoven fabric having thermoformability, a protective member for wiring harness having a predetermined shape can be easily formed from the protective material for wiring harness.

The above binder fibers may be, for example, low melting point polyester fibers or polyolefin fibers. The above binder fibers may be singly used or may be used by being mixed.

Fibers having such a core-sheath structure that a fiber of a core part is covered with a binder layer of a sheath part may be used as the above binder fibers. The binder fiber having the core-sheath structure is such that a low melting point resin having a lower softening temperature than the fiber of the core part is used as a resin of the binder layer.

The binder fiber having the core-sheath structure may be, for example, a low melting pint polyester fiber using a polyethylene terephthalate (PET) resin fiber in the core part and a copolymer of polyethylene isophthalate (PEI) and PET as the resin of the binder layer or a polyolefin fiber using a PET fiber in the core part and a polyolefin-based resin such as a polyethylene resin or a polypropylene resin as the resin of the binder layer.

The heat adhesive nonwoven fabric 3 used preferably has a basis weight of 100 to 2000 g/m² and a thickness of 0.1 to 30 mm. Further, single fibers having a fiber diameter of 1 to 40 dt and a fiber length of 30 to 120 mm can be used as the above fibers. Examples of the fiber shape include cylindrical, hollow, side-by-side and core-sheath type shapes. Further, modified cross-section fibers having different fiber shapes may be used as the fibers.

The above two nonwoven fabrics may be laminated by means such as calendering or ultrasonic bonding besides needle punching.

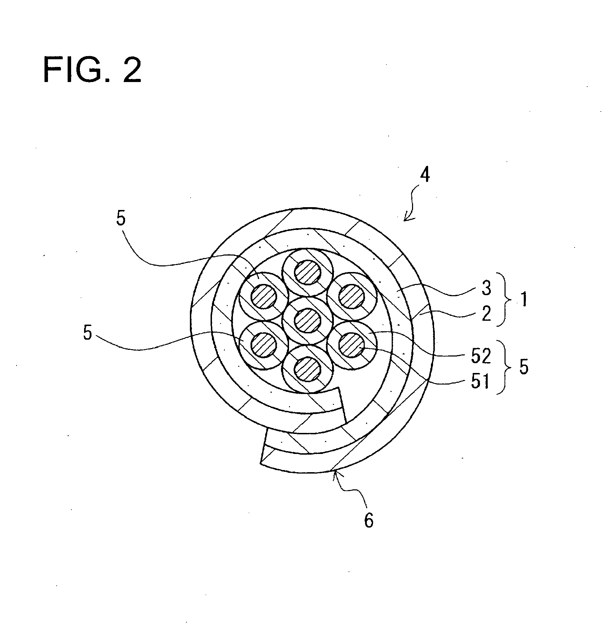

FIG. 2 is a section showing an example of a wiring harness of the present invention. As shown in FIG. 2, a wiring harness 4 is such that a wire bundle formed by bundling a plurality of wires 5 is covered with a protective member for wiring harness 6 formed of the above protective material for wiring harness. The wire 5 is such that a core 51 is covered with an insulator 52.

The wiring harness 4 shown in FIG. 2 is obtained by the following manufacturing method. The protective material for wiring harness 1 is wound around the wire bundle and end parts thereof are caused to overlap so as to be laid one over the other. The entire wiring harness is heated up to a temperature at which the binder resin of the heat adhesive nonwoven fabric is moldable with the shape of the wiring harness retained. The wiring harness is fixed in the predetermined shape by being cooled after being kept at a predetermined temperature for a predetermined time.

In the wiring harness 4 shown in FIG. 2, the wire bundle is covered such that the heat adhesive nonwoven fabric 3 of the protective material for wiring harness 1 is located on an inner side (side near the wires 5) and the base nonwoven fabric 2 is located on an outer side. Since the heat adhesive nonwoven fabric 3 is not exposed to outside, problems such as an adhesive outer surface can be avoided even if the binder fibers of the heat adhesive nonwoven fabric 3 are melted by heating.

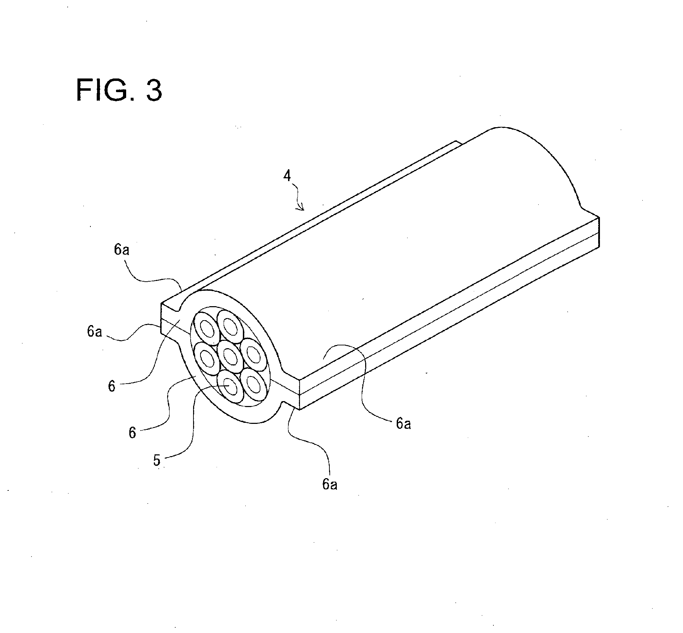

FIG. 3 is an external perspective view showing other examples of the protective member for wiring harness and the wiring harness of the present invention. A wiring harness 4 shown in FIG. 3 uses protective members for wiring harness 6 obtained by molding the protective materials for wiring harness 1 made of the above nonwoven fabrics into a predetermined shape by a molding method such as heat pressing in advance. The protective member for wiring harness 6 is molded into a recessed groove having a semicircular cross-section and joint portions 6a, 6a in the form of flat plates are formed on opposite end parts. The protective member for wiring harness 6 is formed by using the protective material for wiring harness 1 such that the base nonwoven fabric 4 is located on an outer side and the heat adhesive nonwoven fabric 3 is located on an inner side.

The wiring harness 4 shown in FIG. 3 uses two protective members 6, 6 for wiring harness. The wiring harness 4 is formed as follows. The protective members 6, 6 for wiring harness are so arranged as to cover a wire bundle composed of a plurality of wires 5 and the mating joint portions are brought into contact with each other. Thereafter, the entire wiring harness is heated and pressurized, whereby the heat adhesive nonwoven fabrics of the protective members for wiring harness 6, 6 can be bonded and united with each other.

Further, the wiring harness 4 shown in FIG. 3 can also be manufactured by the following method. For example, a predetermined forming mold composed of vertically separated upper and lower molds is used, the protective materials for wiring harness 1 are arranged to face each other in the respective molds, and molding is performed by heating at a predetermined temperature with the mold clamped and the wire bundle 4 sandwiched between the two nonwoven fabrics 1, 1. During molding, the joint portions 6a of the nonwoven fabrics 1, 1 projecting outwardly of the wire bundle 4 are bonded and united.

The protective material for wiring harness and the protective member for wiring harness of the present invention can be used in manufacturing an automotive wiring harness and particularly suitably used for a wiring harness used in a place required to be heat resistant such as in an engine compartment.

Examples of the present invention are shown below.

### [Examples 1-1 to 1-4]

As shown in TABLE-1, only PET short fibers or mixed fibers with binder fibers were used to form base nonwoven fabrics having mixing ratios shown in TABLE-1, mixed fibers of PET short fibers and binder fibers were used as heat adhesive fibers, the base nonwoven fabrics and the heat adhesive nonwoven fabrics were bonded to obtain protective materials for wiring harness of Examples 1-1 to 1-4 each composed of laminated nonwoven fabrics. The nonwoven fabric was produced to have a basis weight of 300 g/m² and a thickness of 4 mm by laminating the above mixed fibers by needle punching. Tests were conducted on tensile strength, high-temperature tensile strength, peel adhesive strength and moldability using the obtained laminated nonwoven fabrics. Test results are also shown in TABLE-1. Note that the details of each fiber and test conditions shown in TABLE-1 are as follows.

### [Concerning Fibers Used in Nonwoven Fabrics]

(a) PET short fibers: polyethylene terephthalate short fibers (6.6 dtx51 mm)
(b) Binder fibers: Core-sheath type short fibers (6.6 dtx51 mm) with a binder layer made of a copolymer of polyethylene isophthalate (PEI) and having a softening point of 110° and a core member made of polyethylene terephthalate (PET) and having a softening point of 255°
(c) PET long fibers: polyethylene terephthalate long fibers (4.4 dt)

### [Tensile Strength]

Tensile strengths were measured by conducting a tensile test on laminated nonwoven fabrics in accordance with JIS K 6252.

### [High-Temperature Tensile Strength]

A tensile test was conducted under conditions similar to those for the above tensile strength under a high-temperature environment of 80°C.

### [Peel Adhesive Strength]

Test pieces were made from the laminated nonwoven fabrics in accordance with JIS K 6854 and a T-peel test was conducted to measure peel adhesive strengths. The test was conducted at a tension rate of 100 mm/min.

### [Moldability]

Two laminated nonwoven fabrics were bonded and pressed at 200°C into a sheet to produce a press-molded article. This press-molded article was visually observed and a success (○) was determined when molding failures such as creases, peels and burns could not be confirmed on a surface, whereas a failure (x) was determined unless otherwise.

### [Comparative Example 1]

For comparison, physical properties of only the base nonwoven fabric of Example 1-4 were evaluated as in Examples. An evaluation result is also shown in TABLE-1.

**[TABLE-1]**

| | | | Example | | | | C. Example | |
|---|---|---|---|---|---|---|---|---|
| | | | 1-1 | 1-2 | 1-3 | 1-4 | 1 | 2 |
| Composition of laminated nonwoven fabric | | | | | | | | |
| | Components of first nonwoven fabric (mass %) | | | | | | | |
| | | (a) PET short fibers | 100 | 90 | 80 | 70 | 70 | - |
| | | (b) Binder fibers | - | 10 | 20 | 30 | 30 | - |
| | | (c) PET long fibers | - | - | - | - | - | - |
| | Components of second nonwoven fabric (mass %) | | | | | | | |
| | | (a) PET short fibers | 50 | 50 | 50 | 50 | - | 50 |
| | | (b) Binder fibers | 50 | 50 | 50 | 50 | - | 50 |
| Test results | | | | | | | | |
| | Tensile strength (MPa) | | 55.3 | 53.6 | 55.5 | 60.2 | 30.5 | 55.3 |
| | High-temp tensile strength (MPa) | | 50.0 | 52.1 | 53.1 | 32.8 | 25.6 | 28.6 |
| | Peel adhesive strength (N/25 mm) | | 43.0 | 48.2 | 56.2 | 39.6 | 18.6 | 46.9 |
| | Moldability (○/×) | | ○ | ○ | ○ | ○ | × | ○ |

As shown in TABLE-1, Comparative Example 1 composed only of the base nonwoven fabric had insufficient moldability and was largely lower in any of tensile strength, high-temperature tensile strength and peel adhesive strength than Examples 1-1 to 1-4. Further, Comparative Example 2 composed only of the heat adhesive nonwoven fabric had a high-temperature tensile strength largely lower than an initial tensile strength, presenting low heat resistance. Contrary to this, any of Examples 1-1 to 1-4 was better in high-temperature adhesive strength than Comparative Examples 1 and 2.

### [Examples 2-1 to 2-4]

As shown in TABLE-2, laminated nonwoven fabrics were produced as in Example 1-1 using a PET long fiber nonwoven fabric as the base nonwoven fabric and using the same nonwoven fabric as the heat adhesive nonwoven fabric used in Example 1-1. In Examples 2-1 to 2-4, a basis weight (g/m²) of PET long fibers was changed to 50, 100, 200 and 300. Using the laminated nonwoven fabrics of Examples 2-1 to 2-4, tests were conducted for tensile strength, high-temperature tensile strength, peel adhesive strength and moldability as in Examples 1-1 to 1-4 of TABLE-1. Test results are also shown in TABLE-2.

### [Comparative Example 3]

For comparison, physical properties of only the base nonwoven fabric used in Examples 2-1 to 2-4 were evaluated. An evaluation result is also shown in TABLE-2.

**[TABLE-2]**

| | | | Example | | | | C. Example |
|---|---|---|---|---|---|---|---|
| | | | 2-1 | 2-2 | 2-3 | 2-4 | 3 |
| Composition of laminated nonwoven fabric | | | | | | | |
| | Components of first nonwoven fabric (mass %) | | | | | | |
| | | (a) PET short fibers | - | - | - | - | - |
| | | (b) Binder fibers | - | - | - | - | - |
| | | (c) PET long fibers | 100 | 100 | 100 | 100 | 100 |
| | Basis weight (g/m²) of first nonwoven fabric | | 50 | 100 | 200 | 300 | 100 |
| | Components of second nonwoven fabric (mass %) | | | | | | |
| | | (a) PET short fibers | 50 | 50 | 50 | 50 | |
| | | (b) Binder fibers | 50 | 50 | 50 | 50 | |
| Test results | | | | | | | |
| | Tensile strength (MPa) | | 100.6 | 456.9 | 563.8 | 683.8 | 405.5 |
| | High-temp tensile strength (MPa) | | 100.5 | 423.5 | 446.8 | 559.3 | 366.8 |
| | Peel adhesive strength (N/25 mm) | | 43.0 | 55.2 | 48.3 | 44.8 | 1.2 |
| | Moldability (○/×) | | ○ | ○ | ○ | ○ | × |

As shown in TABLE-2, Examples 2-1 to 2-4 were good in any of tensile strength, high-temperature tensile strength and peel adhesive strength. Particularly, Examples 2-2 to 2-4 with the base nonwoven fabric having a basis weight of 100 (g/m²) or higher had a tensile strength which was five times or more as high as that of Example 1-1 using the short fiber nonwoven fabric.

Since Comparative Example 3 was composed only of the long fiber nonwoven fabric, both tensile strength and high-temperature tensile strength were good, but peel adhesive strength was poor since no adhesive nonwoven fabric was included and two nonwoven fabrics were hardly bonded. Contrary to this, Examples 2-1 to 2-4 were good in peel adhesive strength.

Although the embodiment of the present invention has been described in detail above, the present invention is not limited to the above embodiment and various changes can be made without departing from the gist of the present invention.

For example, although the protective material for wiring harness of the above embodiment is composed of a laminate of two nonwoven fabrics, a protective material for wiring harness of the present invention may be composed of a laminate of three or more nonwoven fabrics using a plurality of base nonwoven fabrics or heat adhesive nonwoven fabrics.

## Claims

1. A protective material for wiring harness used to form a protective member for wiring harness and composed of a nonwoven fabric laminate formed by laminating at least two nonwoven fabrics, **characterized in that**:
the nonwoven fabric laminate includes a base nonwoven fabric mainly containing main fibers and configured to impart strength and a heat adhesive nonwoven fabric mainly containing binder fibers having a heat adhesive property and configured to impart thermoformability.

2. A protective material for wiring harness according to claim 1, wherein the main fibers of the base nonwoven fabric are short fibers.

3. A protective material for wiring harness according to claim 1 or 2, wherein the main fibers of the base nonwoven fabric are long fibers.

4. A protective material for wiring harness according to any one of claims 1 to 3, wherein the main fibers of the base nonwoven fabric are one type of fibers selected from a group composed of polyether fibers, polyolefin fibers, polyamide fibers, polyvinyl chloride fibers, rayon fibers, acrylonitrile fibers, cellulose fibers and glass fibers.

5. A protective material for wiring harness according to any one of claims 1 to 4, wherein the binder fibers of the heat adhesive nonwoven fabric are one type of fibers selected from a group composed of low melting point polyester fibers and polyolefin fibers.

6. A protective member for wiring harness, **characterized by** being obtained by molding a protective member for wiring harness according to any one of claims 1 to 5 into a predetermined shape.

7. A wiring harness in which a wire bundle is covered with a protective member for wiring harness obtained by molding a protective member for wiring harness according to any one of claims 1 to 5 into a predetermined shape, **characterized in that** the protective member for wiring harness is so arranged that the base nonwoven fabric is located on an outer side.
